# EUROPEAN PATENT SPECIFICATION

(11) **EP 0 878 485 B1**
(45) Date of publication and mention of the grant of the patent: **26.04.2006**
(21) Application number: 97890087.6
(22) Date of filing: 14.05.1997
(51) Int. Cl.: C08F 4/654, C08F 10/00

(54) **A process for polymerization of olefins**
Verfahren zur Polymerisation von Olefinen
Procédé pour la polymérisation des oléfines

(43) Date of publication of application: 18.11.1998
(73) Proprietor: COUNCIL OF SCIENTIFIC AND INDUSTRIAL RESEARCH, New Delhi 110 001 (IN)
(72) Inventor: Sensarma, Soumen, National Chemical Laboratoty, Maharashtra (IN); Sivaram, Swaminathan, National Chemical Laboratory, Maharashtra (IN)
(74) Representative: Schwarz, Albin

(56) References cited:
- EP-A- 0 416 928
- EP-A- 0 589 638
- EP-A- 0 613 908
- EP-A- 0 708 116

## Description

### FIELD OF THE INVENTION

This invention relates to a process for polymerization of olefins. More particularly, it relates to an improved process of polymerization and copolymerization using a solid catalyst capable of giving olefin polymers and copolymers with high catalyst activity especially at high temperatures. Still more particularly, it relates to the process using an improved metallocene catalyst supported with the magnesium halide and silica.

### PRIOR ART REFERENCES

US Pat. No. 5,032,562, describes the preparation of a solid supported catalyst, by the reaction of dibutyl magnesium, a zirconium based neutral metallocene and a compound of a transition metal halide such as titanium tetrachloride and impregnating the said precursor on to silica in the presence onto silica in the presence of an aluminoxane activator. However, this catalyst results in bimodal distribution of molecular weights, which is not desirable in most of the applications where polyethylene is used.

JP 04,96,908, describes another supported solid catalyst prepared by reacting aqueous magnesium halides in presence of silica, metallocene and an organoaluminum activator, which shows only moderate activity towards ethylene polymerization at 80°C.

Eur.Pat.No.EP 613,908, describes a silica-magnesium chloride supported metallocene catalyst which in the presence of an organoboron compound polymerizes ethylene with high yield. However, the catalyst prepared according to this method is not very stable to storage and handling.

EP 0 589 638 A refers to a powder catalyst composition and a process for gas-phase polymerising olefins with the use thereof, wherein the catalyst comprises an inorganic oxide and a hydrocarbon solution of a transition metal belonging to the group IVB of the Periodic Table and an alumoxane. The polymerisation is carried out with an organoaluminum compound as co-catalyst in an autoclave at a pressure of 7 kg/cm².g and a temperature of 85°C for 2 hours.

EP 0 416 928 A describes an ethylene polymerisation catalyst system, wherein the procatalyst comprises a solid carrier with a magnesium compound, an electron donor compound and monocyclopentadienyl titanium trichloride on its surface. The polymerisation of ethylene is carried out in a reactor vessel by suspending the procatalyst in pentane, pressurizing the vessel with hydrogene to a pressure of 5 bars, feeding a pentane solution of triethylaluminium as co-catalyst and a continuous stream of ethylene gas, raising the pressure to 15 bars and the temperature to 90°C and continuing polymerisation for 60 to 90 minutes.

During the course of their research the inventors of the present invention have found that presence of small amounts of anhydrous magnesium chloride (<3%) in the silica supported metallocene catalysts confers unexpected benefits in terms of catalyst activity, molecular weight and molecular weight distributions.

Anhydrous magnesium chloride commonly used as a support in high activity olefin polymerization catalyst is, often not, convenient because it is very brittle and undergoes easy attrition in the polymerization reactor. Silica is a well known support for gas phase as well as fluidized bed polymerization of olefins using titanium based Ziegler-Natta catalysts. However, when used with metallocene type catalysts silica supports show low polymerization activities. Therefore, a combination of the two, namely, silica and anhydrous magnesium chloride, offers a good balance to prepare catalysts with high activity, controlled particle size and good attrition strength.

In a co-pending Indian Patent Application, filed on 21st February, 1997 entitled "A process for the preparation of supported metallocene catalyst" the applicants have described and claimed a process for the preparation of improved supported metallocene catalyst which is capable of being employed for the polymerization of the olefins especially ethylene. The said catalyst comprises of atoms of Mg, halides more particularly Cl., an electron donor compound such as tetrahydrofuran, a neutral metallocene and a solid support based on a refractory oxide.

In other words, the solid catalyst prepared as per the process defined in the above mentioned Indian Patent Application essentially comprises of:
a) a particulate carrier composed of an oxide of at least one selected from among those belonging to the groups II, III, IV of the Periodic Table having a surface area of about 300 m2 /g and containing at least 3 mmol of hydroxyl group per gram of the oxide.
b) a transition metal compound of a metal belonging to the group IVB of the Periodic Table containing a ligand having a cyclopentadienyl skeleton.
c) a particulate compound magnesium halide has the structure MgX2 where, X is selected from the group containing C1, Br, or I.
wherein the magnesium halide and the transition metal compound are supported on the particulate carrier.

Further, the metallocene compound used in the above catalyst has a general formula

(Cp)a(Cp)'bMXx

Cp and Cp' designate each an unsaturated hydrocarbonic radical with a central atom M. The groups Cp and Cp' can be obtained by a covalent bridge (bond).
- M indicates the transition metal which are chosen from the groups IIIB, IVB, VB and VIB of the Periodic Table.
- a, b and x designate the integral numbers such as a+b+x = m, x > 0, and a and or b not equal to zero.
- m indicates the Valency of the transition metal M
- X designates a halogen selected from Cl, Br or I.

### SUMMARY OF THE INVENTION

Therefore, the present invention provides a process for polymerization and copolymerization of olefins using a solid catalyst capable of producing high catalyst activity. In addition, the process can be carried out especially at high temperatures and is capable of being used either in gas or slurry phase.

### DETAILED DESCRIPTION OF THE INVENTION

Accordingly, the present invention provides a process for the polymerization of olefins which comprises polymerizing an olefin or mixture thereof in presence of a solvent, a supported metallocene and an aluminoxane as cocatalyst in a hydrocarbon medium, at a temperature in the range of 50 to 150°C, at a pressure ranging between 1 to 20 bar, for a period of 10 minutes to 10 hours, scavenging the reaction mixture by addition of an organoaluminum compound to remove the last traces of impurities of solvent, separating the polymer by conventional methods like precipitating, filtering, washing the polymer with an organic solvent, drying the polymer to remove the solvent to obtain the product, wherein the supported metallocene is prepared using a catalyst precursor having the formula

MgXₐM_{b}(ED)_{c}Cp_{d}

wherein X is selected from the group consisting of Cl, Br I and may be mixtures thereof,
M is zirconium,
ED is an electron donor compound,
a is 1 to 50, preferably 1.5 to 2.5
b is 0.01 to 1, preferably 0.02 to 0.05
c is 2 to 80, preferably 1.5 to 2.5
d is 0.03 to 1, preferably 0.05 to 0.09
Cp = cyclopentadienyl; and
wherein the Al/Zr ratio of the metallocene and the cocatalyst ranges between 500 to 10,000, and wherein the metallocene is supported on a particulate carrier composed of an oxide of at least one selected from among those belonging to the group II, III, IV of the Periodic Table having a surface area of about 300 m²/g and containing at least 3 mmol of hydroxyl group per gram of the oxide.

In an embodiment of the present invention the olefin used is selected from ethylene, propylene, α-olefins, preferably ethylene.

In yet another embodiment, the aluminoxane co-catalyst used is selected from methylaluminoxane, ethylaluminoxane, hexaisobutylaluminoxane, preferably methylaluminoxane.

In a further embodiment, the hydrocarbon medium used is selected from n-pentane, n-hexane, n-heptane, preferably n-hexane, and the solvent used is selected from toluene, xylene, n-hexane, n-heptane, preferably xylene and the like.

In still another embodiment of the present invention, the metallocene catalyst is partially or completely soluble in the solvent.

The organoaluminium compound used is selected from trimethylaluminium, triisobutylaluminium, triethylaluminium, preferably trimethylaluminium.

In another embodiment of the present invention, the mixture of olefin monomers comprises of ethylene and a second monomer chosen from amongst propylen, 1-butene, 1-hexene, 1-octene, 4-methyl-1-pentene, and cyclic olefins such as norbomene, cyclohexene, 2-vinyl-5-norbomene.

In another feature of the present invention, the solid catalyst precursor used for preparing the supported metallocene has Zr, Cl, Mg and THF in the wt% 0.36, 10, 2.5 and 15.7, respectively. The solid catalyst thus prepared has the general empirical formula:
MgCl_{2.75}Zr_{0.039}THF_{2.25}CP_{0.078}, with THF representing tetrahydrofuran.

The process of the present invention is described hereinbelow with examples which are illustrative only and should not be construed to limit the scope of the present invention in any manner.

### Example-1

All glass equipments were heated under vacuum and flushed with nitrogen. All manipulations involving air-sensitive compounds were performed inside a Labconco Model 50004 inert atmosphere glove box continuously purged with high purity N₂ from a generator (Spantech Model NG 300-1) or under a positive pressure of high purity N₂ using standard bench top inert atmosphere techniques. The solvent xylene used for polymerization used in each case freshly distilled over sodium under N₂. 1-hexene was purified by distilling over CaH₂. The intrinsic viscosities of the polymers obtained from the present invention were determined in decalin as solvent at 135°C using an Ubbelohde viscometer. In all these experiments, methylaluminoxane was added as a 5.4 wt% (as Al) solution in toluene. The MAO had a Me/A1 ratio 1.7, free trimethylaluminum 31 wt% and Al content 10.9 wt% in toluene.

Crystallinity of the copolymer was measured by Differential Scanning Calorimetry (DSC). Polydispersities and molecular weight distribution of the polyethylene samples were measured by GPC (Waters 150C ALC/GPC) at 135°C in 1,2,4- trichlorobenzene. µ-Styragel columns 10⁵, 10⁴, 10³, 500 A° were used and the peaks were calibrated using a standard polystyrene. A 0.3-0.4 % w/v solution was used at a flow rate of 1.0 mL/min.

### Example-2

Polymerization of ethylene was performed in a stirred glass reactor at one atmosphere pressure using xylene as diluent. A gas burette with a reservoir containing silicone oil was used to feed ethylene continuously to the cell. The reaction cell was dried at 155°C overnight and cooled under ethylene. 15.8 mg catalyst (6.23 x 10⁻⁷ mol as Zr) was transferred into the cell inside the glove-box. 50 mL xylene was introduced into the cell using a hypodermic syringe. Polymerization was initiated by the addition of methylaluminoxane in toluene (3.2 x 10⁻³ mol as Al), keeping Al/Zr mol ratio 5000. The reaction temperature was maintained at 70°C. The reaction was terminated after 1/2 h by addition of acidified methanol. The polymer was filtered, washed with methanol and dried at 40°C under vacuum.
Yield: 1.5 g
Activity : 53 Kg PE/g-Zr.h
Intrinsic viscosity : 1.7 dL/g
MWD = 2.67

### Example-3

Polymerization of ethylene was performed in a stirred glass reactor at one atmosphere pressure using xylene as diluent. A gas burette with a reservoir containing silicone oil was used to feed ethylene continuously to the cell. The reaction cell was dried at 155°C overnight and cooled under ethylene. 15 mg catalyst (5.9 x 10⁻⁷ mol as Zr) was transferred into the cell inside the glove-box. Xylene (50 mL, previously treated with trimethylaluminum in order to remove the impurities) was introduced into the cell using a hypodermic syringe. Polymerization was initiated by the addition of methylaluminoxane in toluene (5.9 x 10⁻⁴ mol as Al), keeping Al/Zr mol ratio 1000. The reaction temperature was maintained at 70 °C. The reaction was terminated after 1/2 h by addition of acidified methanol. The polymer was filtered, washed with methanol and dried at 40°C under vacuum.
Yield: 1.45 g
Activity: 54 Kg PE/g-Zr.h
Intrinsic viscosity : 2.2 dL/g

### Example-4

Polymerization of ethylene was performed in a stirred glass reactor at one atmosphere pressure using xylene as diluent. A gas-burette with a reservoir containing silicone oil was used to feed ethylene continuously to the cell. The reaction cell was dried at 155°C overnight and cooled under ethylene. 15.3 mg catalyst (6.04 x 10⁻⁷ mol as Zr) was transferred into the cell inside the glove-box. Xylene (50 mL, previously treated with trimethylaluminum in order to remove the impurities) was introduced into the cell using a hypodermic syringe. Polymerization was initiated by the addition of methylaluminoxane in toluene (1.208 x 10⁻³ mol as Al) , keeping Al/Zr mol ratio 2000. The reaction temperature was maintained at 70°C. The reaction was terminated after 1/2 h by addition of acidified methanol. The polymer was filtered, washed with methanol and dried at 40°C under vacuum.
Yield : 1.6 g
Activity : 58 Kg PE/g-Zr.h
Intrinsic viscosity : 1.9 dL/g
MWD = 2.3

### Example-5

Polymerization of ethylene was performed in a stirred glass reactor at one atmosphere pressure using xylene as diluent. A gas-burette with a reservoir containing silicone oil was used to feed ethylene continuously to the cell. The reaction cell was dried at 155°C overnight and cooled under ethylene. 16 mg catalyst (6.5 x 10⁻⁷ mol as Zr) was transferred into the cell inside the glove-box. Xylene (50 mL, previously treated with trimethylaluminum in order to remove the impurities) was introduced into the cell using a hypodermic syringe. Polymerization was initiated by the addition of methylaluminoxane in toluene (3.25 x 10⁻³ mol as Al), keeping Al/Zr mol ratio 5000. The reaction temperature was maintained at 70 °C. The reaction was terminated after 1/2 h by addition of acidified methanol. The polymer was filtered, washed with methanol and dried at 40°C under vacuum.
Yield: 2.1 g
Activity : 69 Kg PE/g-Zr.h
Intrinsic viscosity : 1.8 dL/g
MWD = 2.74

### Example-6

Polymerization of ethylene was performed in a stirred glass reactor at one atmosphere pressure using xylene as diluent. A gas-burette with a reservoir containing silicone oil was used to feed ethylene continuously to the cell. The reaction cell was dried at 155°C overnight and cooled under ethylene. 15.1 mg catalyst (5.9 x 10⁻⁷ mol as Zr) was transferred into the cell inside the glove-box. Xylene (50 mL, previously treated with trimethylaluminum in order to remove the impurities) was introduced into the cell using a hypodermic syringe. Polymerization was initiated by the addition of methylaluminoxane in toluene (2.95 x 10⁻³ mol as Al), keeping Al/Zr mol ratio 5000. The reaction temperature was maintained at 60°C. The reaction was terminated after 1/2 h by addition of acidified methanol. The polymer was filtered, washed with methanol and dried at 40°C under vacuum.
Yield : 1.5g
Activity : 55 Kg PE/g-Zr.h
Intrinsic viscosity : 2.6 dL/g

### Example-7

Polymerization of ethylene was performed in a stirred glass reactor at one atmosphere pressure using xylene as diluent. A gas-burette with a reservoir containing silicone oil was used to feed ethylene continuously to the cell. The reaction cell was dried at 155°C overnight and cooled under ethylene. 15.3 mg catalyst (6.04 x 10⁻⁷ mol as Zr) was transferred into the cell inside the glove-box. Xylene (50 mL, previously treated with trimethylaluminum in order to remove the impurities) was introduced into the cell using a hypodermic syringe. Polymerization was initiated by the addition of methylaluminoxane in toulene (3.02 x 10⁻³ mol as Al), keeping Al/Zr mol ratio 5000. The reaction temperature was maintained at 80°C. The reaction was terminated after 1/2 h by addition of acidified methanol. The polymer was filtered, washed with methanol and dried at 40°C under vacuum.
Yield : 1.8 g
Activity : 63 Kg PE/g-Zr.h
Intrinsic viscosity : 0.9 dL/g

### Example-8

50 mL of xylene were (previously treated with trimethylaluminum in order to remove the impurities) introduced under N₂ atmosphere into a stainless steel Sotelem reactor with a capacity of 500 mL, equipped with a stirrer rotating at 1800 rpm and with a heating and cooling system. The reactor was heated to 200°C and cooled under N₂ to a temperature 60 + 2 °C. A stainless steel reservoir was used to feed ethylene continuously. 15.8 mg of previously prepared catalyst ( 6.2 x 10⁻⁷ mol as Zr) along with 20 mL xylene was transferred into the reactor by means of a separating funnel. Another 30 mL of xylene was added to the reactor through the separating funnel. The solvent was saturated with ethylene. Polymerization was initiated by the addition of methylaluminoxane in toluene (3.1 x 10⁻³ mol as Al), keeping Al/Zr mol ratio 5000 and a ethylene pressure of 5 bar. The reaction was terminated after 1/2 h by adding acidified methanol. The polymer was filtered, washed with methanol and dried at 40-50°C under vacuum.
Yield : 5 g
Activity : 177 kg PE/g-Zr. h.

### Example-9

50 mL of xylene were (previously treated with trimethylaluminum in order to remove the impurities) introduced under N₂ atmosphere into a stainless steel Sotelem reactor with a capacity of 500 mL, equipped with a stirrer rotating at 1800 rpm and with a heating and cooling system. The reactor was heated to 200°C and cooled under N₂ to a temperature 70 + 3 °C. A stainless steel reservoir was used to feed ethylene continuously. 21.3 mg of previously prepared catalyst ( 8.4 x 10⁻⁷ mol as Zr) along with 20 mL xylene was transferred into the reactor by means of a separating funnel. Another 30 mL of xylene was added to the reactor through the separating funnel. The solvent was saturated with ethylene. Polymerization was initiated by the addition of methylaluminoxane in toluene (4.2 x 10⁻³ mol as Al), keeping Al/Zr mol ratio 5000 and a ethylene pressure of 5 bar. The reaction was terminated after 1/2 h by adding acidified methanol. The polymer was filtered, washed with methanol and dried at 40-50°C under vacuum.
Yield : 7 g
Activity : 183 kg PE/g-Zr. h
Intrinsic viscosity : 2.6 dL/g

### Example-10

50 mL of xylene were (previously treated with trimethylaluminum in order to remove the impurities) introduced under N₂ atmosphere into a stainless steel Sotelem reactor with a capacity of 500 mL, equipped with a stirrer rotating at 1800 rpm and with a heating and cooling system. The reactor was heated to 200°C and cooled under N₂ to a temperature 80 + 2 °C. A stainless steel reservoir was used to feed ethylene continuously. 15.7 mg of previously prepared catalyst ( 6.2 x 10⁻⁷ mol as Zr) along with 20 mL xylene was transferred into the reactor by means of a separating funnel. Another 30 mL of xylene was added to the reactor through the separating funnel. The solvent was saturated with ethylene. Polymerization was initiated by the addition of methylaluminoxane in toluene (3.1 x 10⁻³ mol as Al), keeping Al/Zr mol ratio 5000 and a ethylene pressure of 5 bar. The reaction was terminated after 1/2 h by adding acidified methanol. The polymer was filtered, washed with methanol and dried at 40-50°C under vacuum.
Yield : 9.5 g
Activity : 336 kg PE/g-Zr. h
Intrinsic viscosity : 2.44 dL/g
MWD = 3.07

### Example-11

50 mL of xylene were (previously treated with trimethylaluminum in order to remove the impurities) introduced under N₂ atmosphere into a stainless steel Sotelem reactor with a capacity of 500 mL, equipped with a stirrer rotating at 1800 rpm and with a heating and cooling system. The reactor was heated to 200°C and cooled under N₂ to a temperature 100 + 2 °C. A stainless steel reservoir was used to feed ethylene continuously. 21.3 mg of previously prepared catalyst ( 8.4 x 10⁻⁷ mol as Zr) along with 20 mL xylene was transferred into the reactor by means of a separating funnel. Another 30 mL of xylene was added to the reactor through the separating funnel. The solvent was saturated with ethylene. Polymerization was initiated by the addition of methylaluminoxane in toluene (4.2 x 10⁻³ mol as Al), keeping Al/Zr mol ratio 5000 and a ethylene pressure of 5 bar. The reaction was terminated after 1/2 h by adding acidified methanol. The polymer was filtered, washed with methanol and dried at 40-50°C under vacuum.
Yield: 25 g
Activity : 670 kg PE/g-Zr. h
Intrinsic viscosity : 1.8 dL/g
MWD = 2.44

### Example-12

50 mL of xylene were (previously treated with trimethylaluminum in order to remove the impurities) introduced under N₂ atmosphere into a stainless steel Sotelem reactor with a capacity of 500 mL, equipped with a stirrer rotating at 1800 rpm and with a heating and cooling system. The reactor was heated to 200°C and cooled under N₂ to a temperature 105 + 2 °C. A stainless steel reservoir was used to feed ethylene continuously. 21.3 mg of previously prepared catalyst ( 8.4 x 10⁻⁷ mol as Zr) along with 20 mL xylene was transferred into the reactor by means of a separating runnel. Another 30 mL of xylene was added to the reactor through the separating funnel. The solvent was saturated with ethylene. Polymerization was initiated by the addition of methylaluminoxane in toluene (4.2 x 10⁻³ mol as Al), keeping Al/Zr mol ratio 5000 and a ethylene pressure of 5 bar. The reaction was terminated after 1/3 h by adding acidified methanol. The polymer was filtered, washed with methanol and dried at 40-50°C under vacuum.
Yield: 21 g
Activity : 822 kg PE/g-Zr. h
Intrinsic viscosity : 1.75 dL/g
MWD = 3.05

### Example-13

50 mL of xylene were (previously treated with trimethylaluminum in order to remove the impurities) introduced under N₂ atmosphere into a stainless steel Sotelem reactor with a capacity of 500 mL, equipped with a stirrer rotating at 1800 rpm and with a heating and cooling system. The reactor was heated to 200 °C and cooled under N₂ to a temperature 110 + 2 °C. A stainless steel reservoir was used to feed ethylene continuously. 18.8 mg of previously prepared catalyst ( 7.4 x 10⁻⁷ mol as Zr) along with 20 mL xylene was transferred into the reactor by means of a separating funnel. Another 30 mL of xylene was added to the reactor through the separating funnel. The solvent was saturated with ethylene. Polymerization was initiated by the addition of methylaluminoxane in toluene (3.7 x 10⁻³ mol as Al), keeping Al/Zr mol ratio 5000 and a ethylene pressure of 5 bar. The reaction was terminated after 1/2 h by adding acidified methanol. The polymer was filtered, washed with methanol and dried at 40-50°C under vacuum.
Yield : 30 g
Activity : 890 kg PE/g-Zr. h
Intrinsic viscosity : 1.7 dL/g
MWD = 2.78

### Example-14

50 mL of xylene were (previously treated with trimethylaluminum in order to remove the impurities) introduced under N₂ atmosphere into a stainless steel Sotelem reactor with a capacity of 500 mL, equipped with a stirrer rotating at 1800 rpm and with a heating and cooling system. The reactor was heated to 200°C and cooled under N₂ to a temperature 80 °C. A stainless steel reservoir was used to feed monomer ethylene and hydrogen continuously. 17.2 mg of previously prepared catalyst ( 6.8 x 10⁻⁷ mol as Zr) along with 20 mL xylene was transferred into the reactor by means of a separating funnel. Another 30 mL of xylene was added to the reactor through the separating funnel. 100 mL of hydrogen was introduced into the reservoir. The solvent was saturated with ethylene and hydrogen mixture. Polymerization was initiated by the addition of methylaluminoxane in toluene (3.4 x 10⁻³ mol as Al), keeping Al/Zr mol ratio 5000 and maintaining pressure of 5 bar. The reaction was terminated after 1/2 h by adding acidified methanol. The polymer was filtered, washed with methanol and dried at 40-50°C under vacuum.
Yield : 3.5 g
Activity : 113 kg PE/g-Zr. h
Intrinsic viscosity : 1.48 dL/g

### Example 15

50 mL of xylene were (previously treated with trimethylaluminum in order to remove the impurities) introduced under N₂ atmosphere into a stainless steel Sotelem reactor with a capacity of 500 mL, equipped with a stirrer rotating at 1800 rpm and with a heating and cooling system. The reactor was heated to 200°C and cooled under N₂ to a temperature 90 °C. A stainless steel reservoir was used to feed monomer ethylene and hydrogen continuously. 18 mg of previously prepared catalyst ( 7.1 x 10⁻⁷ mol as Zr) along with 20 mL xylene was transferred into the reactor by means of a separating funnel. Another 30 mL of xylene was added to the reactor through the separating funnel. 50 mL of hydrogen was introduced into the reservoir.The solvent was saturated with ethylene and hydrogen mixture. Polymerization was initiated by the addition of methylaluminoxane in toluene (3.55 x 10⁻³ mol as Al), keeping Al/Zr mol ratio 5000 and maintaining pressure of 5 bar. The reaction was terminated after 1/2 h by adding acidified methanol. The polymer was filtered, washed with methanol and dried at 40-50 °C under vacuum.
Yield: 17 g
Activity : 525 kg PE/g-Zr. h
Intrinsic viscosity : 1.1 dL/g
MWD = 2.64

### Example-16

Copolymerization of ethylene and 1-hexene was performed in a stirred glass reactor at one atmosphere pressure using xylene as diluent. A gas-burette with a reservoir containing silicone oil was used to feed ethylene continuously to the cell. The reaction cell was dried at 155°C overnight and cooled under ethylene. 12.4 mg catalyst (6.52 x 10⁻⁷ mol as Zr) was transferred into the cell inside the glove-box. Xylene (50 mL, previously treated with trimethylaluminum in order to remove the impurities) was introduced into the cell using a hypodermic syringe followed by addition of 1-hexene (8.056 x 10⁻³ mol). Polymerization was initiated by the addition of methylaluminoxane in toulene (3.30 x 10⁻³ mol as Al), keeping Al/Zr mol ratio 5000. The reaction temperature was maintained at 70°C. The reaction was terminated after 1/2 h by addition of acidified methanol. The polymer was filtered, washed with methanol and dried at 40°C under vacuum.
Yield : 1.8 g
Activity : 60 Kg PE/g-Zr.h
Intrinsic viscosity : 1.47 dL/g
Crystallinity : 45.33 %

### Example-17

Copolymerization of ethylene and 1-hexene was performed in a stirred glass reactor at one atmosphere pressure using xylene as diluent. A gas-burette with a reservoir containing silicone oil was used to feed ethylene continuously to the cell. The reaction cell was dried at 155°C overnight and cooled under ethylene. 12.3 mg catalyst (6.47 x 10⁻⁷ mol as Zr) was transferred into the cell inside the glove-box. Xylene (50 mL, previously treated with trimethylaluminum in order to remove the impurities) was introduced into the cell using a hypodermic syringe followed by addition of 1-hexene (0.012 mol). Polymerization was initiated by the addition of methylaluminoxane in toulene (3.25 x 10⁻³ mol as Al), keeping Al/Zr mol ratio 5000. The reaction temperature was maintained at 60°C. The reaction was terminated after 1/2 h by addition of acidified methanol. The polymer was filtered, washed with methanol and dried at 40°C under vacuum.
Yield : 1.7 g
Activity : 56 Kg PE/g-Zr.h
Intrinsic viscosity : 0.985 dL/g
Crystallinity : 31.3%

### Example-18

A metallocene catalyst supported on silica was prepared and the amount of zirconium on the solid catalyst was found to be 0.53%.

Polymerization of ethylene was performed in a stirred glass cell at one atmosphere pressure using xylene as diluent. A gas-burette with a reservoir containing silicone oil was used to feed ethylene continuously to the cell. The reaction cell was dried at 155°C overnight and cooled under ethylene. 10.3 mg catalyst (5.98 x 10⁻⁷ mol as Zr) was transferred into the cell inside the glove-box. Xylene (50 mL, previously treated with trimethylaluminum in order to remove the impurities) was introduced into the cell using a hypodermic syringe. Polymerization was initiated by the addition of methylaluminoxane in toulene (3 x 10⁻³ mol as Al), keeping Al/Zr mol ratio 5000. The reaction temperature was maintained at 70°C. The reaction was terminated after 1/2 h by addition of acidified methanol. The polymer was filtered, washed with methanol and dried at 40°C under vacuum.
Yield : 1.2 g
Activity : 44 Kg PE/g-Zr.h
Intrinsic viscosity : 1.5 dL/g
MWD = 3.57

It is observed from an examination of comparative example with those of example that incorporation of low amounts of anhydrous magnesium chloride (<3 %) in silica support enhances the catalytic activity, increases molecular weight and narrows the molecular weight distribution (Table-1). The beneficial effect of addition of anhydrous magnesium chloride to silica supported metallocene catalyst for olefin polymerization is unexpected and unanticipated.

**Table-1 : Ethylene Polymerization using SiO₂ supported and SiO₂-MgCl₂ supported Cp₂ZrCl₂/MAO catalyst²**

| | | | |
|---|---|---|---|
| Example | Activity (Kg PE/g Zr.h) | [η] dL/g | MWD |
| Comparative example-1 | 44 | 1.45 | 3.57 |
| Example-4 | 69 | 1.81 | 2.74 |

| | | | |
|---|---|---|---|
| ^{a} All polymerization were carried out in xylene (50 mL); Al/Zr = 5000; T = 70°C; time = 30 min; P= 1 atm of ethylene. | | | |

## Claims

1. A process for the polymerization of olefins which comprises polymerizing an olefin or mixture thereof in presence of a solvent, a supported metallocene and an aluminoxane as cocatalyst in a hydrocarbon medium, at a temperature in the range of 50 to 150°C, at a pressure ranging between 1 to 20 bar, for a period of 10 minutes to 10 hours, scavenging the reaction mixture by addition of an organoaluminum compound to remove the last traces of impurities of solvent, separating the polymer by conventional methods like precipitating, filtering, washing the polymer with an organic solvent, drying the polymer to remove the solvent to obtain the product,
wherein
the supported metallocene is prepared using a catalyst precursor having the formula
MgXₐM_{b}(ED)_{c}Cp_{d},
wherein
X is selected from the group consisting of Cl, Br I and may be mixtures thereof,
M is zirconium,
ED is an electron donor compound,
a is 1 to 50,
b is 0.01 to 1,
c is 2 to 80,
d is 0.03 to 1,
Cp = cyclopentadienyl; and
wherein the Al/Zr ratio of the metallocene and the cocatalyst ranges between 500 to 10,000, and wherein the metallocene is supported on a particulate carrier composed of an oxide of at least one selected from among those belonging to the group II, III, IV of the Periodic Table having a surface area of about 300 m²/g and containing at least 3 mmol of hydroxyl group per gram of the oxide.

2. A process as claimed in claim 1, wherein the olefin used is selected from ethylene, propylene, α-olefins.

3. A process as claimed in claim 1 or 2, wherein the catalyst precursor has the formula MgCl_{2.75}Zr_{0.039}THF_{2.25}Cp_{0.078}, with THF representing tetrahydrufuran.

4. A process as claimed in claim 1 wherein the aluminoxane co-catalyst used is selected from methylaluminoxane, ethylaluminoxane, hexaisobutylaluminoxane.

5. A process as claimed in claim 1 wherein the hydrocarbon medium used is selected from n- pentane, n-hexane, n-heptane.

6. A process as claimed in claim 1 wherein the solvent used in the reaction is selected from toluene, xylene, n- hexane, n- heptane.

7. A process as claimed in claim 1 wherein the metallocene catalyst is partially or completely soluble in the solvent.

8. A process as claimed in claim 1 wherein the organoaluminium compound used is selected from trimethylaluminium, triisobutlyaluminium, triethylaluminium.

9. A process as claimed in claim 1 wherein the mixture of olefin monomers comprises of ethylene and a second monomer chosen from amongst propylene, 1-butene, 1-hexene, 1-octene, 4-methyl-1-pentene, and cyclic olefins such as norbornene, cyclohexene, 2-vinyl-5-norbomene.

10. A process as claimed in any of claims 1 to 9, wherein a is 1.5 to 2.5, b is 0.02 to 0.05, c is 1.5 to 2.5, and d is 0.05 to 0.09.

## Patentansprüche

1. Verfahren zur Polymerisierung von Olefinen, welches das Polymerisieren eines Olefins oder einer Mischung davon in Gegenwart eines Lösungsmittels, eines Metallocens auf einem Träger und eines Aluminoxans als Cokatalysator in einem Kohlenwasserstoffmedium bei einer Temperatur im Bereich von 50 bis 150°C und einem Druck im Bereich von 1 bis 20 bar für einen Zeitraum von 10 Minuten bis 10 Stunden umfasst, sowie das Reinigen der Reaktionsmischung durch Hinzufügen einer aluminiumorganischen Verbindung zur Entfernung der letzten Spuren von Lösungsmittelverunreinigungen, das Abtrennen des Polymers durch herkömmliche Verfahren wie Fällen, Filtrieren, Waschen des Polymers mit einem organischen Lösungsmittel, das Trocknen des Polymers zur Entfernung des Lösungsmittels, um das Produkt zu erhalten,
wobei
das Metallocen auf einem Träger unter Verwendung eines Katalysatorvorläufers mit der Formel
MgXₐM_{b}(ED)_{c}Cp_{d}
hergestellt wird,
wobei
X ausgewählt ist aus der Gruppe, bestehend aus Cl, Br I und möglicherweise Mischungen davon,
M Zirconium ist,
ED eine Elektronendonorverbindung ist,
a 1 bis 50 ist,
b 0,01 bis 1 ist,
c 2 bis 80 ist,
d 0,03 bis 1 ist,
Cp = Cyclopentadienyl; und
wobei das Al/Zr-Verhältnis des Metallocens und des Cokatalysators im Bereich zwischen 500 und 10.000 liegt und wobei das Metallocen auf einem teilchenförmigen Träger getragen wird, der aus zumindest einem Oxid, ausgewählt unter denen, die zur Gruppe II, III, IV des Periodensystems gehören, besteht, eine Oberfläche von etwa 300 m²/g aufweist und zumindest 3 mmol Hydroxylgruppe pro Gramm Oxid enthält.

2. Verfahren wie in Anspruch 1 beansprucht, wobei das verwendete Olefin aus Ethylen, Propylen, α-Olefinen ausgewählt ist.

3. Verfahren wie in Anspruch 1 oder 2 beansprucht, wobei der Katalysatorvorläufer die Formel MgCl_{2,75}Zr_{0,039}THF_{2,25}Cp_{0,078} aufweist, wobei THF für Tetrahydrofuran steht.

4. Verfahren wie in Anspruch 1 beansprucht, wobei der verwendete Aluminoxan-Cokatalysator aus Methylaluminoxan, Ethylaluminoxan, Hexaisobutylaluminoxan ausgewählt ist.

5. Verfahren wie in Anspruch 1 beansprucht, wobei das verwendete Kohlenwasserstoffmedium aus n-Pentan, n-Hexan, n-Heptan ausgewählt ist.

6. Verfahren wie in Anspruch 1 beansprucht, wobei das bei der Reaktion verwendete Lösungsmittel aus Toluol, Xylol, n-Hexan, n-Heptan ausgewählt ist.

7. Verfahren wie in Anspruch 1 beansprucht, wobei der Metallocen-Katalysator im Lösungsmittel teilweise oder vollständig löslich ist.

8. Verfahren wie in Anspruch 1 beansprucht, wobei die verwendete aluminiumorganische Verbindung aus Trimethylaluminium, Triisobutylaluminium, Triethylaluminium ausgewählt ist.

9. Verfahren wie in Anspruch 1 beansprucht, wobei die Mischung aus Olefinmonomeren Ethylen und ein zweites Monomer, ausgewählt unter Propylen, 1-Buten, 1-Hexen, 1-Octen, 4-Methyl-1-penten, und cyclische Olefine, wie z.B. Norbomen, Cyclohexen, 2-Vinyl-5-norbornen, umfasst.

10. Verfahren wie in einem der Ansprüche 1 bis 9 beansprucht, wobei a 1,5 bis 2,5 ist, b 0,02 bis 0,05 ist, c 1,5 bis 2,5 ist und d 0,05 bis 0,09 ist.

## Revendications

1. Procédé pour la polymérisation d'oléfines qui comprend la polymérisation d'une oléfine ou d'un mélange de celle-ci en présence d'un solvant, d'un métallocène supporté et d'un aluminoxane en tant que cocatalyseur dans un milieu hydrocarbure, à une température comprise dans l'intervalle allant de 50 à 150°C, à une pression allant de 1 à 20 bars, pendant une période comprise entre 10 minutes et 10 heures, l'épuration du mélange réactionnel par ajout d'un composé organo-aluminium pour enlever les dernières traces d'impuretés du solvant, en séparant le polymère par des procédés conventionnels tels que la précipitation, le filtrage, le lavage du polymère avec un solvant organique, le séchage du polymère pour retirer le solvant afin d'obtenir le produit,
dans lequel
le métallocène supporté est préparé en utilisant un précurseur de catalyseur ayant la formule suivante
MgXₐM_{b}(ED)_{c}Cp_{d}
dans laquelle
X est choisi parmi le groupe comprenant Cl, Br, I et éventuellement des mélanges de ceux-ci,
M est un atome de zirconium,
ED est un composé donneur d'électrons,
a est un nombre compris entre 1 et 50,
b est un nombre compris entre 0,01 et 1,
c est un nombre compris entre 2 et 80,
d est un nombre compris entre 0,03 et 1,
Cp est du cyclopentadiényle ; et
dans laquelle le rapport Al/Zr du métallocène sur le cocatalyseur est compris entre 500 et 10.000, et dans laquelle le métallocène est supporté sur un support particulaire composé d'un oxyde d'au moins un élément choisi parmi ceux appartenant aux groupes II, III et IV du tableau périodique, ayant une surface d'environ 300 m²/g, et contenant au moins 3 mmoles de groupe hydroxyle par gramme d'oxyde.

2. Procédé selon la revendication 1, dans lequel l'oléfine utilisée est choisie parmi l'éthylène, le propylène, les α-oléfines.

3. Procédé selon l'une quelconque des revendications 1 ou 2, dans lequel le précurseur de catalyseur a la formule MgCl_{2,75}Zr_{0,039}THF_{2,25}Cp_{0,078}, avec THF représentant le tétrahydrofuranne.

4. Procédé selon la revendication 1, dans lequel le cocatalyseur d'aluminoxane utilisé est choisi parmi le méthylaluminoxane, l'éthylaluminoxane, l'hexaisobutylaluminoxane.

5. Procédé selon la revendication 1, dans lequel le milieu hydrocarbure utilisé est choisi parmi le n-pentane, le n-hexane, le n-heptane.

6. Procédé selon la revendication 1, dans lequel le solvant utilisé pour la réaction est choisi parmi le toluène, le xylène, le n-hexane, le n-heptane.

7. Procédé selon la revendication 1, dans lequel le catalyseur métallocène est partiellement ou totalement soluble dans le solvant.

8. Procédé selon la revendication 1, dans lequel le composé organo-aluminium utilisé est choisi parmi le triméthylaluminium, le triisobutylaluminium, le triéthylaluminium.

9. Procédé selon la revendication 1, dans lequel le mélange de monomères d'oléfines comprend de l'éthylène et un second monomère choisi parmi le propylène, 1-butène, 1-hexène, 1-octène, 4-méthyl-1-pentène, et les oléfines cycliques telles que le norbornène, le cyclohexène, le 2-vinyl-5-norbornène.

10. Procédé selon l'une quelconque des revendications 1 à 9, dans lequel a est compris entre 1,5 et 2,5, b est compris entre 0,02 et 0,05, c est compris entre 1,5 et 2,5 et d est compris entre 0,05 et 0,09.
